# EUROPEAN PATENT SPECIFICATION

(11) **EP 3 506 043 B1**
(45) Date of publication and mention of the grant of the patent: **22.04.2020**
(21) Application number: 17210643.7
(22) Date of filing: 27.12.2017
(51) Int. Cl.: G05D 23/01, G05D 23/19, F24D 19/10

(54) **METHOD FOR CONTROLLING A HEATING OR COOLING SYSTEM**
VERFAHREN ZUR STEUERUNG EINES HEIZ- ODER KÜHLSYSTEMS
PROCÉDÉ DE COMMANDE D'UN SYSTÈME DE CHAUFFAGE OU DE REFROIDISSEMENT

(43) Date of publication of application: 03.07.2019
(73) Proprietor: Danfoss A/S, 6430 Nordborg (DK)
(72) Inventor: Jensen, Jes Vestervang, 6430 Nordborg (DK); Nielsen, Peter Gammeljord, 6430 Nordborg (DK)
(74) Representative: Patentanwälte Olbricht Buchhold Keulertz

(56) References cited:
- US-A1- 2013 168 459
- US-A1- 2016 091 880
- US-A1- 2016 231 755
- US-B1- 8 844 834

## Description

The present invention relates to a method for controlling a heating or cooling system, the system comprising a heat exchanger connected in series with a valve and control means controlling an opening degree of the valve, the method comprising the steps of: forming a difference between a room temperature and a room temperature set point and adjusting the opening degree of the valve based on the difference.

Such a method is commonly known, for example from US 2016/0091880 A1. The control of the temperature in a room is performed in a closed loop control in which the real room temperature is compared with a room temperature set point. If a difference between the room temperature and the room temperature set point exists, the valve is opened when the room temperature is too low and is closed when the room temperature is too high. Basically, each closed loop control can be used.

Sometimes the set point of the room temperature is changed. Such a change can be made by a person in the room to be heated or cooled. The change can also be caused by a night set-back. In such a situation it takes some time until the room temperature has reached the new room temperature set point. The object underlying the invention is to reach a desired room temperature after a change of the room temperature set point in a quick manner.

This object is solved in that a memorized steady-state working point of the system is used, a boost value based on the steady-state working point is calculated, wherein upon a change of the room temperature set point the opening degree of the valve is changed, wherein the opening degree of the valve (4) is limited to a degree of opening based on the boost value.

The invention is defined by independent claim 1.

The steady-state working point of the system is a point obtained in the past. When conditions have been observed in which a relation between several parameters of the system has not been changed, in particular the parameters including at least an opening degree of the valves, supply temperature of a heat carrier medium supplied to the heat exchanger, or return temperature of the heat exchanger, such conditions are used s starting point for the further control. Such a steady-state working point can be filtered, if necessary. It defines, for example, a condition which opening degree of the valve is necessary to reach a specific room temperature or return temperature in the last one, two or three days. Based on this steady-state working point the boost value can be calculated and the valve is opened to a modified maximum extend to increase the room temperature as quick as possible (in case the system is used for heating). However, there is a limitation based on the boost value. In this way it is possible to avoid that the heat exchanger is driven into a saturated state. A waste of energy can be avoided.

In an embodiment of the invention the working point corresponds to a valve position. A valve position can easily be determined. When the valve is actuated by means of a stepping motor the valve position is related to a number of steps the stepping motor has performed since a starting point.

In an embodiment the working point corresponds to an opening degree of the valve. The opening degree takes additionally into account a presetting of the valve.

In an alternative embodiment the working point corresponds to a return temperature of the heat exchanger. The return temperature of the heat exchanger can easily be measured. The return temperature of the heat exchanger gives an indication about the heat delivery of the heat exchanger.

In an embodiment the boost value is a temperature value which is based on the return temperature. In this case there will be a day-to-day connection between the room temperature and the return temperature. The information what was a suitable return temperature set point to achieve the room temperature yesterday or a few days ago is assumed to be a good starting point for the todays return temperature set point.

In an embodiment of the invention the valve is opened in steps. In this way the opening stroke is subdivided in smaller sections which are suitable for a better adaption of the parameters to the set point.

In an embodiment a size of the steps is determined on basis of the boost value. In this way it is possible to limit the opening rate of the valve. It is, for example, possible to open the valve only by 10% of the maximum valve position or by 10% of the maximum boost temperature.

In an embodiment the room temperature set point is temporarily changed when the return temperature exceeds the boost value. This is a simple way to achieve an adjustment.

In an embodiment of the invention the return temperature is monitored and in case of temperature changes that are not based on valve actuation the valve is actuated. Such a change of return temperature can be caused, for example, by a change in differential pressure or by a change in temperature of a medium supplied to the heat exchanger. This cause can be counteracted.

In an embodiment the valve actuation is performed by changing the room temperature set point. In this way it is not necessary to have an additional point of action within the control loop.

Preferred embodiments of the invention will now be described in more detail with reference to the drawing, wherein:
- Fig. 1: shows a schematic diagram of a heating or cooling system,
- Fig. 2: shows a time function of some of parameters of the system shown in Fig. 1,
- Fig. 3: shows a schematic diagram of a second embodiment of a heating or cooling system,
- Fig. 4: shows a time function of some parameters of the system shown in Fig. 3,
- Fig. 5: shows different time functions of parameters of the system shown in Fig. 3,
- Fig. 6: shows a schematic diagram of a third embodiment of a heating or cooling system,
- Fig. 7: shows a time function of some parameters of the system shown in Fig. 6,
- Fig. 8: shows a time function of some parameters of the system shown in Fig. 6 in a second possibility of controlling the system, and
- Fig. 9: shows a time function of some parameters of the system shown in Fig. 6 using a third possibility of controlling.

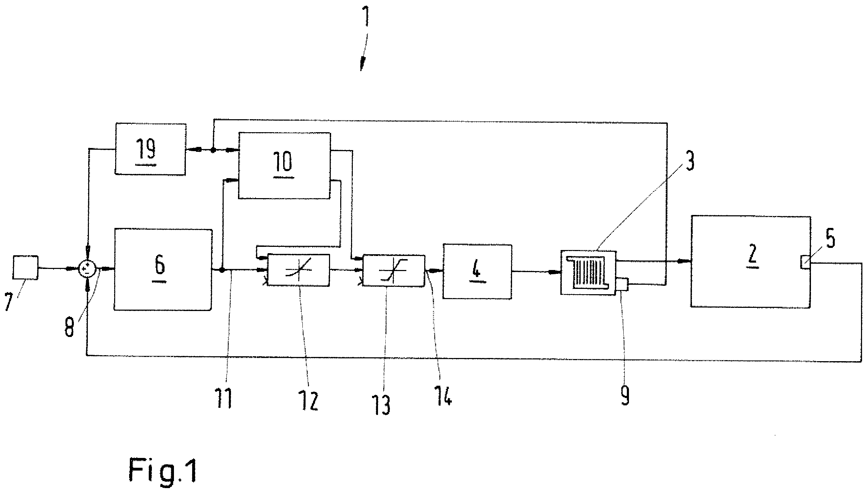

Fig.1 schematically shows a system 1 for heating or cooling a room 2. A heat exchanger 3 which is supplied with a heat carrying fluid is arranged within the room 2.

In order to keep simple the following explanation the system is explained in connection with the heating of the room 2. In this case, the heat exchanger 3 is a radiator. However, it is clear that the system can be used for cooling of the room 2 as well when the heat exchanger 3 has another form and is not supplied with a hot fluid as heat charrier but with cold fluid as heat carrier.

Flow of the heat carrier medium through the radiator is controlled by means of a valve 4. Valve 4 is connected in series with the heat exchanger 3.

A temperature sensor 5 detects the room temperature.

As will be explained later, the opening degree of the valve 4 is controlled by means of a controller 6. The controller can be, for example a PID controller.

A room temperature set point 7 is given. The room temperature sensed by the room temperature sensor 5 is substracted from the room temperature set point to form a difference 8 (or error) which is fed to the controller 6. In the following this is also called modified room temperature set point.

Furthermore, a return temperature sensor 9 detects the temperature of the fluid at the outlet of the heat exchanger. The return temperature is fed back to a return temperature monitor 10.

The controller 6 outputs a valve position 11 which is supplied to the return temperature monitor 10 and at the same time to a dynamic rate limiter 12. The dynamic rate limiter 12 is optional, i.e. it can be omitted.

The output of the rate limiter dynamic 12 is inputted into a dynamic saturation or a dynamic limiter 13 the output of which is a modified valve position 14 which is fed into valve 4 to control the flow rate through the heat exchanger 3.

The valve position 11 outputted by the controller 6 is fed into the return temperature monitor 10. The return temperature monitor 10 monitors the valve position 11 over the time and at the same time the return temperature from return temperature sensor 9. In other words, the return temperature monitor is able to find out a steady-state working point of the system 1 which means that, for example, there was a day-to-day connection between the valve position 11 and the return temperature so that when there was a suitable return temperature to achieve room temperature yesterday this is assumed to be a good starting point for today's control. This steady-state working point is filtered and memorized in the return temperature monitor 10.

In the present case this steady-state working point is expressed as valve position.

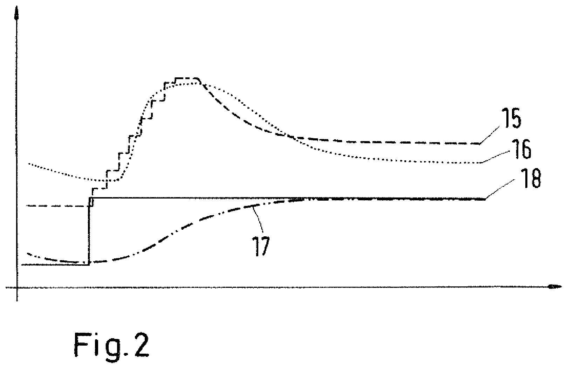

Fig. 2 shows the behavior for some parameters of the system 1.

A graph 15 shows the valve position over time. A graph 16 shows the return temperature over time. A graph 17 shows the room temperature over time and a graph 18 shows the room temperature set-point over time.

More precisely in the right half of Fig. 2 steady-state conditions or conditions of "normal operation" are shown, i.e. conditions which do not change over time.

Based on the valve position in steady-state or "normal operation" a maximum valve position is calculated. To this end, the valve position 11 outputted by the controller 6 is used and a difference between the steady-state valve position and the actual valve position 11 given by controller 6 is calculated and multiplied with a gain-factor. This product is added to the valve position 11 outputted by the controller 6. Alternative a maximum valve position can be calculated by multiplying the gain-factor with the steady-state valve position.

The gain-factor can be adjusted based on the response time of the system which can be derived from a temperature gradient. A slow heat-up (flat gradient) indicates that the gain-factor needs to be higher and opposite. A realistic gain-factor various from 1,1 to 2,0. The gradient "target" used to calculate the gain-factor is affected by the highest measured return temperature, overshot, etc.

In this case the maximum valve position is adjusted step by step. The size of the step (more precisely the maximum size of the step) is based on the maximum valve position, e.g. 10% of the maximum valve position. The maximum valve step size is used to limit the opening rate of the valve 4. It is, for example, possible to allow valve 4 only to open 10% of the maximum valve position each minute.

The system 1 furthermore comprises a tendency controller 19. The tendency controller reacts on return temperature changer. The return temperature is fed to the tendency controller 19 as well.

A rapid return temperature change at a steady-state valve position indicates a change, for example in the differential pressure or supply temperature in supply line 7. The tendency controller 19 counteracts.

When, for example, at steady-state valve position the return temperature suddenly starts to increase, the tendency controller 19 measures the change rate and lowers the room temperature set point 7 to the room controller which will make the valve opening degree to decrease which again will make the return temperature decrease again. In this way, control can be achieved.

A slightly modified method can be performed with the system 1 as well. In this case, the rate limiter dynamic 12 is omitted and, as explained above, size of the steps is calculated by the controller, for example, by a first order set point filter in the controller 6, provided that time constant is sufficient.

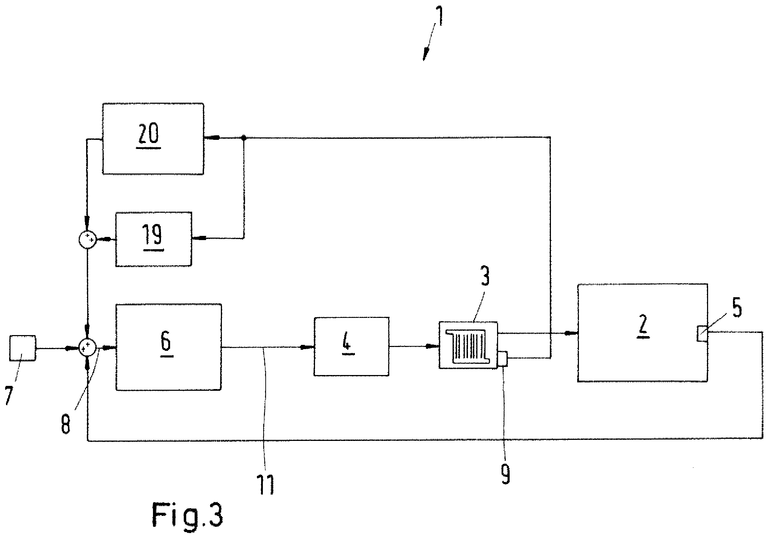

Fig. 3 shows a second embodiment of the heating and cooling system 1. The same elements are denoted with the same reference numerals.

In this embodiment as well a difference 8 or error between the room temperature sensed by the room temperature sensor 5 and the room temperature set point 7 is fed to the controller to adjust the valve position 11 or opening degree of the valve 4.

The return temperature sensed by the return temperature sensor 9 is fed back to a return temperature limiter 20 and, as before, to the tendency controller 19.

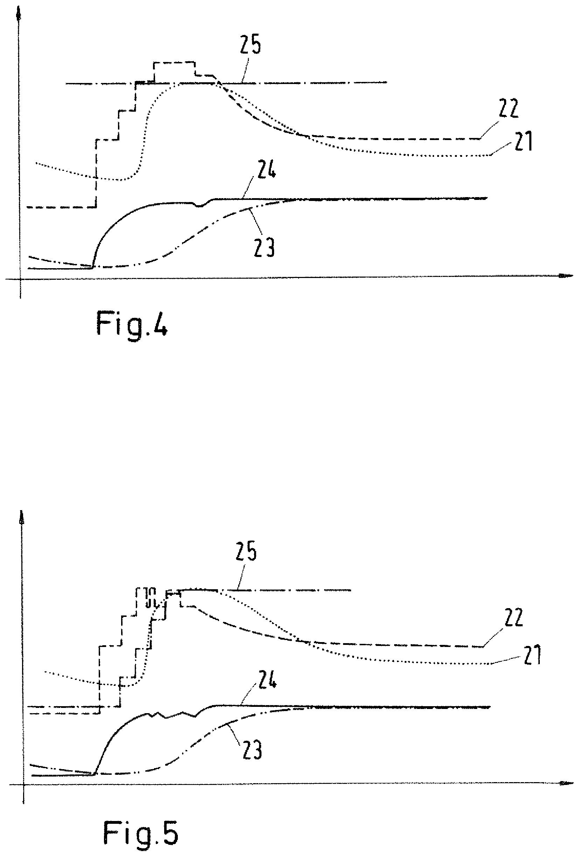

The function of the return temperature limited 20 is explained in Fig. 4 and 5 showing two embodiments of the method.

In Fig. 4 the working point of the system is the return temperature in normal operation or steady-state. This steady-state return temperature is filtered and memorized, for example, in return temperature limiter 20.

The return temperature is shown with graph 21. Valve position is shown with graph 22, room temperature is shown with graph 23, room temperature set point is shown with graph 24, and a maximum boost temperature is shown with graph 25. All graphs show the behavior of the respective parameters over time which runs from the left to the right as in Fig. 2 and 5 as well.

When the room temperature set point increases, the maximum boost temperature 25 is calculated. The maximum boost temperature is the maximum allowable return temperature. It can be calculated, for example, by adding a boost value to the steady-state return temperature. The boost value can be adjusted based on the response time (temperature gradient) of the system 1. A slow heat-up (flat gradient) indicates that the gain-factor needs to be higher and opposite. A realistic boost value varies from 5 to 20 [K].

A gradient "target" used to calculate the gain-factor is affected by the highest measured return temperature, overshoot, etc.

The valve position is increased. As it is shown in Fig. 4 this increase is performed stepwise. The size of the step can depend on the maximum boost temperature. It is not necessary that the steps all have the same size.

When the valve position or the opening degree of valve 4 is increased, more heating water flows through the heat exchanger 3 with the consequence that the return temperature increases as well. At a certain point in time the return temperature exceeds the maximum boost temperature. In order to compensate for this, the room temperature set point is temporarily lowered. This can be seen in graph 24 below the position where the return temperature exceeds the maximum boost temperature.

The tendency controller 19 works in the same way as explained in connection with the embodiment shown in Fig. 1 and 2.

Fig. 5 shows another embodiment similar to that of Fig. 4. Same numerals are used to denote the same graph.

In this embodiment the maximum allowed return temperature is calculated based on the steady-state working point and a time response of the return temperature.

As in the embodiment shown in Fig. 4, the return temperature in normal operation is detected, filtered and memorized. Based on the memorized steady-state return temperature a maximum return temperature or maximum boost temperature is calculated. The maximum boost temperature is the sum of the steady-state return temperature plus a boost value. The boost value can be adjusted based on the response time (temperature gradient) of the system. As before, a slow heat-up (flat gradient) indicates that the gain-factor needs to be higher and opposite. As before, a realistic boost value varies from 5 to 20 [K], in particular 5 to 15 [K].

The gradient "target" used to calculate the gain-factor is affected by the highest measured return temperature, overshoot, etc.

The maximum boost temperature change is based on the maximum boost temperature. It is, for example possible to limit the increase to 10% of the maximum boost temperature per time step, or a function like a first order of maximum boost temperature (boost temperature will follow the function x(1-exp(-t/tau)), where x is the maximum boost temperature to be filtered, t is the time, and tau is the time constant.

The maximum boost temperature and the maximum boost temperature change divided by the boost temperature (all parameters over time) are combined into one limit function. If this limit function (shown by graph 25 in Fig. 5) is exceeded by the measured return temperature (graph 21) the input to the controller is lowered by lowering the room temperature set point which causes the valve 4 to close a bit.

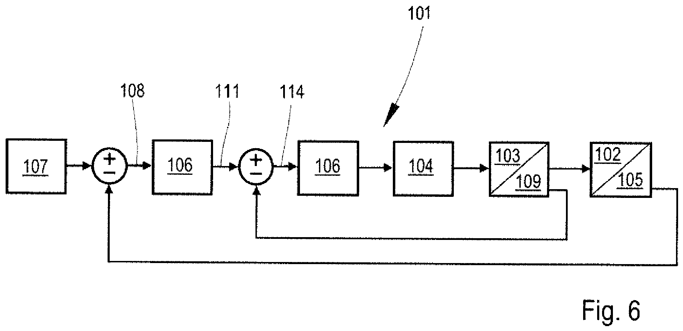

Fig. 6 shows a schematic diagram of a third embodiment of a system 101 for heating or cooling a room 102. The system 101 according to this embodiment uses both an room temperature sensor 105 as well as an return temperature sensor 109.

A room temperature set point 107 is fed into a controller 106. However, the room temperature set point 107 is modified by a temperature value from the room temperature sensor 105 to obtain a modified room temperature set point 108. This modified room temperature set point 108 leads to an opening degree 111 which is, however, modified by a feedback of the temperature from the return temperature sensor 109 to obtain a modified opening degree 114.

It is furthermore possible to adapt the deviation from the room temperature set point 108 based on a temperature gradient calculated from two or more room temperature measurements provided by the room temperature sensor 105. The working point comprising at least the opening degree can correspondingly also store an expected temperature gradient.

The opening degree 111 can further be modified by measurements of the return temperature from the return temperature sensor 109. If the return temperature does not correspond to the expected temperature from the working point, e. g. because the return temperature has not yet or too quickly approached a constant return temperature, the working point is adapted accordingly.

For example, if it is expected that the return temperature has reached 50°C at half an hour after changing the working point but the temperature measurements of the return temperature sensor 109 show that the return temperature is only 40°C, then the controller 106 will change the working point to increase the opening degree of the valve 104 stored in the working point.

However, this adaption of the working point will usually be made gradually, to prevent unnecessary fluctuations in the control of the system 101.

The adapted value for the opening degree of the valve 104 is then stored for future use. The adapted working point is furthermore used to control the opening degree of valve 104 when the working point is chosen the next time. The change of opening degree of the valve 104 results in a change in temperature in the heat exchanger 103. In particular, the return temperature measured by the return temperature sensor 109 will change for some time after a change in working point until the return temperature approaches a constant value. Temperature measurements by the return temperature sensor 109 are repeatedly provided and fed back to the controller 106 to allow a recalculation of the opening degree of the valve 104 stored in the working point. The change in opening degree of the valve 104 resulting in a change of the heating or cooling provided by the heat exchanger 103 will then result in a temperature change in the room 102. This change in the room temperature is measured by the room temperature sensor 105 which provides temperature measurements which are fed back to the controller 106. The temperature measurements will again be used to recalculate the working point and in particular the opening degree of the valve 104 stored in the working point.

Consequently, the provided control method may use either one or two of the readjustment loops to adjust the working point(s) based on the temperature measurement provided by the at least one temperature sensor 105, 109 to adapted working point(s). This adapted working point can be readjusted time and again, while the system may use a fraction of the difference between the calculated necessary opening degree to the currently stored opening degree in the working point when adapting the working point. This allows to avoid changing the working point strongly based on mere fluctuations.

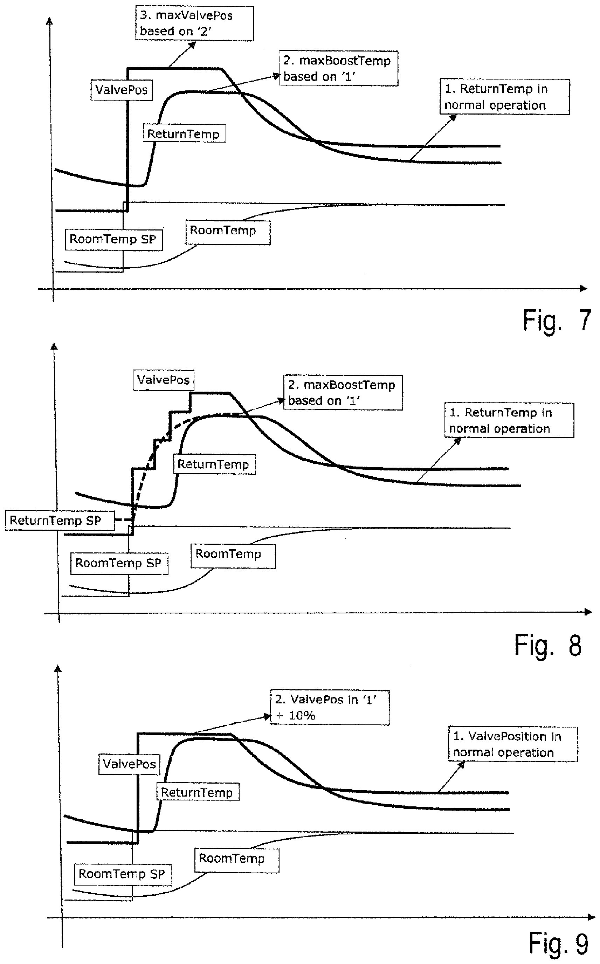

Fig. 7 shows a first possibility of using the method according to an embodiment of the invention. It should be born in mind that the return temperature "normal operation", i.e. in a steady state has been learned by operating the heating or cooling system over a certain time. This return temperature in normal operation is used, for example, for controlling the valve 104 when the room temperature should be increased. Such a situation can arise, for example, when the heating system changes from a night temperature to a day temperature.

Fig. 7 shows the room temperature set point "RoomTemp SP", the room temperature "Room Temp", the valve position "ValvePos", and the return temperature "ReturnTemp".

As mentioned above, the return temperature "ReturnTemp" in normal operation has been learned in a step 1 which is shown in the part of the curve "ReturnTemp" in which the return temperature has reached a stable value. However, the return temperature is available in the system from previous learning cycles.

Based on the return temperature in normal operation a maximum boost temperature "maxBoostTemp" is determined in step 2. The maxBoostTemperature can be, for example, the return temperature in normal operation plus a "boost value" which can be, for example, 8°C. However, the maximum boost temperature is limited to a predetermined value. It should keep a predetermined distance to the supply temperature with which heating or cooling fluid is supplied to the heat exchanger valve.

When the room temperature set point "RoomTemp SP" increases or boosts, the valve position "ValvePos" is adjusted according to a maximum valve position which is based on the "maxBoostTemp" obtained in step 2.

Accordingly, the return temperature increases as well because more fluid is supplied to the heat exchanger. Consequently, the room temperature increases as well. However, it increases faster than it would be the case if the return temperature had been increased to a value corresponding to the desired room temperature.

After a certain time the room temperature reaches the room temperature set point and at this time or, as shown, earlier the opening degree of the valve can be decreased. The return temperature approaches the "ReturnTemp" in normal operation.

Fig. 8 shows a slightly different way.

Instead of "learning" the working point it is possible to use a traditional controller, for example a PI or PID controller.

Based on the return temperature in a steady state condition, the working point for "normal" return temperature is saved. This is schematically shown in Box "1. ReturnTemp in normal operation".

As the room temperature set point "RoomTemp SP" increases or boosts, the return temperature set point "ReturnTemp SP" is slowly increased, for example by a ramp or a polynominal function of first order towards a maximum boost temperature "maxBoostTemp". The maximum boost temperature is based on the return temperature in normal operation. The valve position, i.e. the opening degree of the valve is increased following the return temperature set point. The valve position can be increased, for example, stepwise. The return temperature set point is shown in a dotted line. The actual return temperature follows with a time delay. When the actual return temperature reaches the maximum boost temperature the opening degree of the valve can be reduced. The room temperature "RoomTemp" reaches the room temperature set point "RoomTemp SP" and the return temperature decreases to the return temperature in normal operation.

Fig. 9 shows a further possibility.

Here a traditional PI or PID controller can be used.

Based on the return temperature in a steady state condition, the working points for "normal" return temperature and valve position are saved.

When the room temperature set point increases or boosts, the valve position is initiated to learned steady state work point plus an addition, for example, plus 10%. Controls are stalled unless maximum return temperature or the desired room temperature is reached. When the return temperature has reached the maximum, the opening degree of the valve can be decreased and the room temperature control can take over.

In all Fig. 7-9 the horizontal axis is a time axis.

## Claims

1. Method for controlling a heating or cooling system (1), the system comprising a heat exchanger (3) connected in series with a valve (4), control means (6) controlling an opening degree of the valve (4), the method comprising the steps of: forming a difference between a room temperature and a room temperature set point (7) and adjusting the opening degree of the valve (4) based on the difference, **characterized in that** a memorized steady-state working point of the system is used, a boost value based on the steady-state working point is calculated, wherein upon a change of the room temperature set point (7) the opening degree of the valve (4) is changed, wherein the opening degree of the valve (4) is limited to a degree of opening based on the boost value.

2. Method according to claim 1, **characterized in that** the working point corresponds to a valve position

3. Method according to claim 2, **characterized in that** the working point corresponds to an opening degree of the valve (4).

4. Method according to claim 1, **characterized in that** the working point corresponds to a return temperature of the heat exchanger.

5. Method according to claim 4, **characterized in that** the boost value is a temperature value which is based on the return temperature.

6. Method according to any of claims 1 to 5, **characterized in that** the valve (4) is opened in steps.

7. Method according to claim 6, **characterized in that** a size of the steps is determined on basis of the boost value.

8. Method according to claim 6 or 7, **characterized in that** the room temperature set point (7) is temporarily changed when the return temperature exceeds the boost value.

9. Method according to any of claims 1 to 8, **characterized in that** the return temperature is monitored and in case of temperature changes that are not based on valve actuation the valve is actuated.

10. Method according to claim 9, **characterized in that** the valve actuation is performed by changing the room temperature set point (7).

## Patentansprüche

1. Verfahren zur Steuerung eines Heiz- oder Kühlsystems (1), wobei das System einen mit einem Ventil (4) in Reihe geschalteten Wärmetauscher (3) und einen Öffnungsgrad des Ventils (4) steuernde Steuerungsmittel (6) umfasst, wobei das Verfahren folgende Schritte umfasst: Bilden einer Differenz zwischen einer Raumtemperatur und einem Raumtemperatursollwert (7) und Einstellen des Öffnungsgrads des Ventils (4) auf Grundlage der Differenz, **dadurch gekennzeichnet, dass** ein gespeicherter stationärer Arbeitspunkt des Systems verwendet wird und ein Erhöhungswert auf Grundlage des stationären Arbeitspunkts berechnet wird, wobei bei einer Änderung des Raumtemperatursollwerts (7) der Öffnungsgrad des Ventils (4) geändert wird, wobei der Öffnungsgrad des Ventils (4) auf einen Öffnungsgrad auf Grundlage des Erhöhungswerts begrenzt ist.

2. Verfahren nach Anspruch 1, **dadurch gekennzeichnet, dass** der Arbeitspunkt einer Ventilstellung entspricht.

3. Verfahren nach Anspruch 2, **dadurch gekennzeichnet, dass** der Arbeitspunkt einem Öffnungsgrad des Ventils (4) entspricht.

4. Verfahren nach Anspruch 1, **dadurch gekennzeichnet, dass** der Arbeitspunkt einer Rücklauftemperatur des Wärmetauschers entspricht.

5. Verfahren nach Anspruch 4, **dadurch gekennzeichnet, dass** der Erhöhungswert ein Temperaturwert ist, der auf der Rücklauftemperatur beruht.

6. Verfahren nach einem der Ansprüche 1 bis 5, **dadurch gekennzeichnet, dass** das Ventil (4) schrittweise geöffnet wird.

7. Verfahren nach Anspruch 6, **dadurch gekennzeichnet, dass** eine Größe der Schritte auf Grundlage des Erhöhungswerts bestimmt wird.

8. Verfahren nach Anspruch 6 oder 7, **dadurch gekennzeichnet, dass** der Raumtemperatursollwert (7) vorübergehend geändert wird, wenn die Rücklauftemperatur höher als der Erhöhungswert ist.

9. Verfahren nach einem der Ansprüche 1 bis 8, **dadurch gekennzeichnet, dass** die Rücklauftemperatur überwacht wird und im Falle von Temperaturänderungen, die nicht auf einer Ventilbetätigung beruhen, das Ventil betätigt wird.

10. Verfahren nach Anspruch 9, **dadurch gekennzeichnet, dass** die Ventilbetätigung durchgeführt wird, indem der Raumtemperatursollwert (7) geändert wird.

## Revendications

1. Procédé pour commander un système de chauffage ou de refroidissement (1), le système comprenant un échangeur de chaleur (3) raccordé en série à une vanne (4), des moyens de commande (6) commandant un degré d'ouverture de la vanne (4), le procédé comprenant les étapes de : formation d'une différence entre une température ambiante et un point de consigne de température ambiante (7) et réglage du degré d'ouverture de la vanne (4) en se basant sur la différence, **caractérisé en ce qu'**un point de fonctionnement stable mémorisé du système est utilisé, une valeur d'amplification basée sur le point de fonctionnement stable est calculée, dans lequel, lors d'un changement du point de consigne de température ambiante (7), le degré d'ouverture de la vanne (4) est changé, dans lequel le degré d'ouverture de la vanne (4) est limité à un degré d'ouverture basé sur la valeur d'amplification.

2. Procédé selon la revendication 1, **caractérisé en ce que** le point de fonctionnement correspond à une position de vanne.

3. Procédé selon la revendication 2, **caractérisé en ce que** le point de fonctionnement correspond à un degré d'ouverture de la vanne (4).

4. Procédé selon la revendication 1, **caractérisé en ce que** le point de fonctionnement correspond à une température de retour de l'échangeur de chaleur.

5. Procédé selon la revendication 4, **caractérisé en ce que** la valeur d'amplification est une valeur de température qui est basée sur la température de retour.

6. Procédé selon l'une quelconque des revendications 1 à 5, **caractérisé en ce que** la vanne (4) est ouverte par étapes.

7. Procédé selon la revendication 6, **caractérisé en ce que** la taille des étapes est déterminée sur la base de la valeur d'amplification.

8. Procédé selon la revendication 6 ou 7, **caractérisé en ce que** le point de consigne de température ambiante (7) est changé temporairement lorsque la température de retour dépasse la valeur d'amplification.

9. Procédé selon l'une quelconque des revendications 1 à 8, **caractérisé en ce que** la température de retour est surveillée et, dans le cas de changements de température qui ne sont pas basés sur un actionnement de la vanne, la vanne est actionnée.

10. Procédé selon la revendication 9, **caractérisé en ce que** l'actionnement de la vanne est effectué en changeant le point de consigne de température ambiante (7).
